# EUROPEAN PATENT APPLICATION

(11) **EP 4 625 153 A1**
(43) Date of publication of application: **01.10.2025**
(21) Application number: 25163731.0
(22) Date of filing: 14.03.2025
(51) Int. Cl.: G06F 8/656, G06F 16/24

(54) **EXECUTION GRAPHS FOR DATA PROCESSING AGILITY IN AN EDGE COMPUTING ENVIRONMENT**

(30) Priority: 29.03.2024 US 202418622137
(71) Applicant: Microsoft Technology Licensing, LLC, Redmond, WA 98052 (US)
(72) Inventor: ABDELWAHAB, Sherif, Redmond, 98052 (US); RAJPUT, Deepthi Singh, Redmond, 98052 (US); TESSIORE, Lorenzo, Redmond, 98052 (US); DOUCEUR, John Russell, Redmond, 98052 (US)
(74) Representative: CMS Cameron McKenna Nabarro Olswang LLP

(57) **Abstract**

The techniques described herein improve the management and execution of data processing in an edge computing environment using a programmable connector. The programmable connector defines a plurality of data sources, one or more data destinations, a plurality of operators, and a plurality of edges that are collectively useable to construct an execution graph. The execution graph provides a structure for the processing of data on a cluster of host servers in the edge computing environment. Stated alternatively, the execution graph models the flow of data from input data sources that are connected to the edge computing environment to output data destinations that are also connected to the edge computing environment. Accordingly, a node in the execution graph represents an operator and an edge in the execution graph connects two nodes.

## Description

### BACKGROUND

A cloud platform such as MICROSOFT AZURE, AMAZON WEB SERVICES, GOOGLE CLOUD, etc. is configured to provide resources for various tenants. Stated alternatively, datacenters that comprise the cloud platform are useable to provide services to businesses, organizations, entities, and/or individual users (collectively referred to herein as tenants) at remote locations via network connections. These services can include or support the deployment of modules to devices located at, or associated with, the remote locations. A module comprises a unit of programming code that performs a function related to data processing (e.g., a dataflow). In various examples, one or more modules can comprise an application (e.g., a data processing application).

In some instances, a remote location of a tenant can be associated with an "edge computing" environment. Edge computing is a distributed computing concept that pushes the processing of data closer to the sources that generate the data to be processed and/or to the destinations that consume the data after the data has been processed. Accordingly, the latency associated with communicating data to a datacenter in the cloud platform and/or from the datacenter in the cloud platform is avoided via the use of edge computing. To this end, an edge computing environment includes one or more computing devices (e.g., servers) that are part of, or close to, a remote location. Stating alternatively, the underlying infrastructure of an edge computing environment is not part of a centralized datacenter in the cloud platform.

Unfortunately, a developer that wants to update an application executing in an edge computing environment encounters a variety of issues that impede the operational efficiency of the application. An update to the application can be triggered by a modification to a module that is part of the application, an addition of a new module to the application, or a removal of an existing module from the application. Furthermore, the update to the application typically needs to be hardcoded into the application in a particular code format. Thus, deploying the update to the application requires scheduling and installing new code (or alternatively removing existing code), in the particular code format, on the underlying infrastructure that is executing the application (e.g., a Kubernetes pod).

The hardcoding required to update the application makes the application inflexible to changes. The inflexibility in this sense causes the aforementioned issues encountered by developers when deploying updates to applications. More specifically, a first issue is related to the fact that an update to the application requires the underlying infrastructure on which the application is executing to reboot, as a modification to one module requires recompiling the entire application. The reboot process causes application downtime and/or introduces unwanted latency from extended "cold-start" times associated with initiating execution of the application based on a modified module, an added module, and/or a removed module. Application downtime and/or unwanted latency can be extremely costly and disruptive to tenant environments that continually operate time-sensitive applications (e.g., a production application, an industrial application).

A second issue relates to challenges with scalability. For example, a data processing application in an edge computing environment often needs to effectively and efficiently scale (e.g., add computing resources, remove computing resources) in response to fluctuating workloads and/or data generation. The first issue described above prevents the data processing application from scaling in an effective and efficient manner, which often results in computational errors (e.g., data item disordering) and data processing bottlenecks.

A third issue relates to managing the diverse array of data sources and/or data destinations that rely on an application such as a data processing application. For instance, the data sources may include cameras, specialized sensors, and/or programmable logic controllers, and the data processing application may be tasked with processing data produced by these data sources and funneling the processed data to various destinations such as databases, message queues, file systems, blob storage, and/or live web streams. Again, the first issue described above prevents the developer from being able to effectively and efficiently manage (e.g., change) the diverse array of data sources and/or data destinations associated with a data processing application.

A fourth issue relates to the reloading of user-defined dynamically linked libraries when an update to the application is deployed. The reloading of user-defined dynamically linked libraries introduces vulnerabilities that expose the application to an external and, perhaps, malicious entity.

### SUMMARY

The system described herein implements techniques for improving the management and execution of data processing in an edge computing environment using a programmable connector. The programmable connector defines a plurality of data sources, one or more data destinations, a plurality of operators, and a plurality of edges that are collectively useable to construct an execution graph. The execution graph provides a structure for the processing of data on a cluster of host servers in the edge computing environment. Stated alternatively, the execution graph models the flow of data from input data sources that are connected to the edge computing environment to output data destinations that are also connected to the edge computing environment. Accordingly, a node in the execution graph represents an operator and an edge in the execution graph connects two nodes.

An operator is a fundamental unit of a dataflow that performs at least one data processing function. Furthermore, an operator is associated with a module (e.g., is configured to execute a module). As described above, a module comprises a unit of programming code that performs a function related to data processing. The modules described herein are written in a portable binary code format (e.g., WebAssembly (WASM)).

By implementing the data processing in the edge computing environment using the programmable connector capable of constructing an execution graph for modules written in a portable binary code format, the techniques described herein allow for more agility and flexibility with regard to changing circumstances related to a data processing application. More specifically, an update to the data processing application can target a specific module and/or operator, and thus, an update does not need to be scheduled and hardcoded into the underlying infrastructure (e.g., a Kubernetes pod) thereby causing the entire application to be recompiled. Consequently, the techniques described herein eliminate the aforementioned issues related to downtime and/or latency (e.g., caused by reboots and cold-starts), scalability, and the real-time management and adaptability of data sources and/or data destinations. As a result, the techniques described herein improve the availability of a tenant service.

Furthermore, since the modules are written in a portable binary code format, user-defined dynamically linked libraries no longer need to be reloaded when an update to an application is deployed. This removes or limits the exposure to an external and, perhaps, malicious entity. Additionally, dynamically linked libraries are platform-specific, which causes portability issues for applications configured to be executed across different operating systems or architectures. Using a platform independent portable binary code format, such as WASM, allows the modules to execute on a diverse set of operating systems or architectures in an efficient manner as modules written in a portable binary code format only require a small memory footprint.

The system described herein includes the programmable connector deployed to a cluster of host servers in an edge computing environment. A programmable connector is created by a developer of a data processing application and is stored in a cloud platform for deployment to edge computing environment(s). The data sources are configured to generate data streams of data items. Each data item is associated with a timestamp that reflects when the data item was generated. Accordingly, the system receives streams of data items from the respective data sources defined by the programmable connector. The system then uses the execution graph, constructed based on the programmable connector, to process the streams of data items according to the timestamps. The processing generates processed data items that the system provides to the data destinations defined by the programmable connector.

In an execution graph, a data item moves between operators and along edges. The timestamps associated with the data items are used to coordinate the flow of data and ensure computations are performed in a consistent manner. As described above, an operator is configured to perform a function on at least one stream of data items and provide the stream of data items to a next operator or a data destination via an edge defined by the programmable connector.

In various examples, an operator defined by the programmable connector includes a uniform resource identifier (e.g., a uniform resource locator) that identifies the module that contains code. The module may be a container image that is stored in a registry in the cloud platform. Because the registry is in the cloud platform it may be referred to as a "centralized" registry. By using references to modules stored in the registry, a module can be accessed by more than one execution graph and/or programmable connecter. When the execution graph is constructed and deployed to a cluster of host servers in an edge computing environment using the programmable connector, the code is downloaded from the cloud platform to a corresponding host server for execution.

The system includes an update monitor configured to monitor the registry for updates to the modules referenced by the operators in the execution graph. Accordingly, during the processing of the streams of data items, the system may determine that the programmable connector has been modified via an update to an operator and corresponding referenced module that already exist in the programmable connector. For example, a developer can create a new version of a module that is referenced by an operator in the execution graph, compile the new version of the module into a container image, and push the container image to the registry. Each container image can be tagged with a label (e.g., "latest" or "most recent") or a version identifier (e.g., "1", "2", "3", and so forth) so the system can appropriately manage different versions of a module. When the system determines that the programmable connector has been modified via an update to a module associated with an operator, the system performs the update on a host server in the edge computing environment. That is, the system can download and install an updated module on the host server executing the operator targeted by the update.

Additionally, the update monitor is configured to monitor the cloud platform's version of the programmable connector to determine if a different type of update has occurred. For example, a developer may add a new operator to the programmable connector, or alternatively, remove an existing operator from the programmable connector. The system can additionally perform these type of updates on a host server in the edge computing environment. That is, the system can assign the new operator to a host server and download and install a new module referenced by the new operator for execution on the host server. Or, the system can identify the host server that is executing an existing operator, and remove the existing operator from the host server. An addition of a new operator and/or the removal of an existing operator can be done while the execution graph continues to receive and process the streams of data items. Consequently, when a referenced module is updated, and/or when the structure of the execution graph changes, the programmable connector automatically reloads selective operators and/or reconstructs the dataflow without interrupting the ongoing processing of the data items.

There are different types of operators, as discussed below. Many of the operators use the timestamps to ensure that data is processed in the correct order. The data streams can be received and processed in real-time. Alternatively, the data streams can be received and processed as batches. An operator is configured to receive a data item as an input and to produce a data item as an output. The production of the data item as an output may add a timestamp to the data item. Alternatively, the production of the data item as an output may replace an old timestamp associated with the data item with a new timestamp.

A map operator is configured to perform a transformation on a data item. The map operator uses the timestamps associated with the data items to maintain the order of the data items as they are being processed, ensuring that causality is preserved in the transformation.

A concatenate operator is configured to merge at least two input streams of data items into a single stream of output data items. The concatenate operator uses the timestamps associated with the data items to ensure that data items from different streams are concatenated in a coherent time order, maintaining the correct sequence of items.

An inspect operator is configured to examine a data item in a stream of data items for debugging and monitoring purposes. The inspect operator uses the timestamps associated with the data items to understand the timing of events and the state of various components at any point in time.

A filter operator is configured to select a data item in a stream of data items based on a predicate. The filter operator uses the timestamps associated with the data items to determine when conditions for filtering are satisfied.

A broadcast operator is configured to send copies of data items in a stream of data items to a defined set of next operators and/or data destinations. The broadcast operator uses the timestamps associated with the data items to ensure that the set of next operators or data destinations receive the data items at the correct logical time, keeping the processing state consistent.

A branch operator is configured to split a stream of data items based on a condition. The branch operator uses the timestamps associated with the data items to help route the data items to the correct branch without violating the temporal order of the data items.

In one example, a collection of the aforementioned types of operators can be defined in a programmable connector to execute machine learning models and complex algorithms (e.g., image processing algorithms).

This Summary is provided to introduce a selection of concepts in a simplified form that are further described blow in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF DRAWINGS

The Detailed Description is described with reference to the accompanying figures. In the description detailed herein, references are made to the accompanying drawings that form a part hereof, and that show, by way of illustration, specific embodiments or examples. The drawings herein are not drawn to scale. Like numerals represent like elements throughout the several figures.
FIG. 1 illustrates an example environment in which a system improves the management and execution of data processing in an edge computing environment using a programmable connector.
FIG. 2 illustrates example types of operators and the functions performed on the data streams by the example types of operators.
FIG. 3 illustrates an example programmable connector defining components useable to construct an execution graph to be deployed to, and executed in, an edge computing environment.
FIG. 4 illustrates the efficiencies with which the modules described herein can be shared and updated for multiple programmable connectors written in different formats.
FIG. 5 is a flowchart depicting an example process for improving the management and execution of data processing in an edge computing environment using a programmable connector.
FIG. 6 is an example computing system in accordance with the present disclosure.

### DETAILED DESCRIPTION

The system described herein implements techniques for improving the management and execution of data processing in an edge computing environment using a programmable connector. The programmable connector defines a plurality of data sources, one or more data destinations, a plurality of operators, and a plurality of edges that are collectively useable to construct an execution graph. The execution graph provides a structure for the processing of data on a cluster of host servers in the edge computing environment. Stated alternatively, the execution graph models the flow of data from input data sources that are connected to the edge computing environment to output data destinations that are also connected to the edge computing environment. Accordingly, a node in the execution graph represents an operator and an edge in the execution graph connects two nodes.

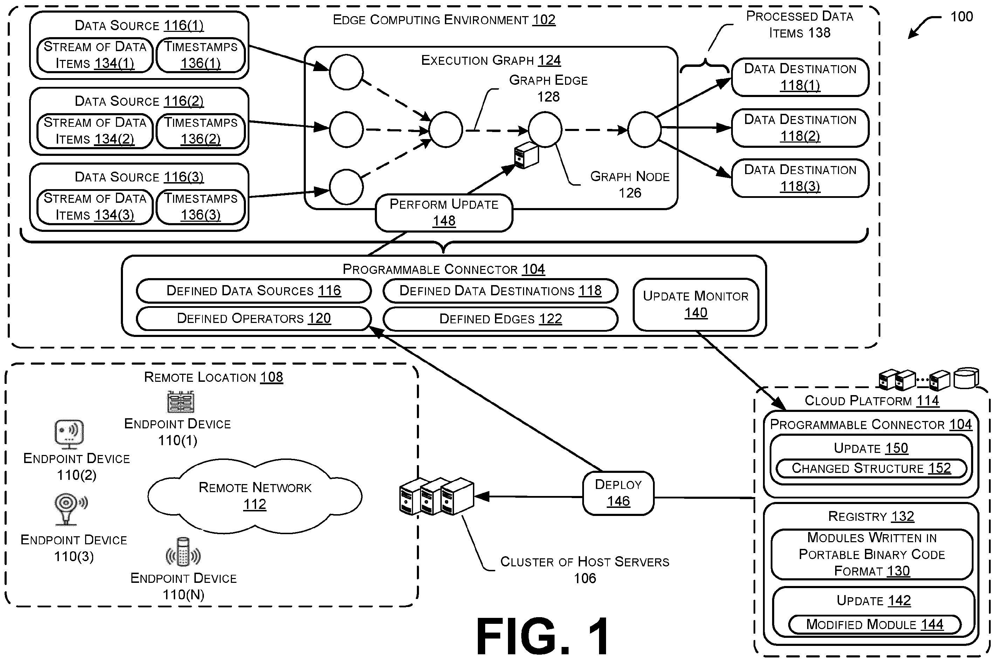

FIG. 1 illustrates an example environment 100 in which a system improves the management and execution of data processing in an edge computing environment 102 using a programmable connector 104. The edge computing environment 102 is executed on a cluster of host servers 106 associated with a remote location 108. In various examples, the remote location 108 is associated with a tenant service and endpoint devices 110(1-N) within the remote location 108 are connected to one another, and to the cluster of host servers 106, via a remote network 112 (e.g., a tenant's own on-premises network, a network provided by a cellular operator such as VERIZON, T-MOBILE, or AT&T). Moreover, the remote network 112 can connect multiple remote locations 108 and provide access to resources in the cloud platform 114. Accordingly, the number N of endpoint devices 110 can be in the tens, hundreds, thousands, or even millions, and can be contained in one remote location 108 or multiple different remote locations 108.

The programmable connector 104 is deployed from a cloud platform 114 to the edge computing environment 102. As mentioned above, the remote location 108 may belong to a tenant of the cloud platform 114, and thus, the programmable connector 104 is generated by a developer of the tenant for a specific purpose. For instance, the specific purpose may be to update an artificial intelligence model, a machine learning model, and/or a data processing algorithm.

One of the systems described herein is composed of the cluster of host servers 106 executing in the edge computing environment 102 and the components of the programmable connector 104 deployed to the edge computing environment 102. For instance, the programmable connector 104 defines a plurality of data sources 116, one or more data destinations 118, a plurality of operators 120, and a plurality of edges 122 that are collectively useable to construct an execution graph 124. In the example of FIG. 1, the data sources 116 include data source 116(1), data source 116(2), and data source 116(3). Moreover, the data destinations 118 include data destination 118(1), data destination 118(2), and data destination 118(3). The number of data sources 116 and data destinations 118 defined by the programmable connector 104 do not have to be the same and are typically different.

The execution graph 124 provides a structure for the processing of data on the cluster of host servers 106 configured in the edge computing environment 102. Stated alternatively, the execution graph 124 models the flow of data from the data sources 116(1-3) that generate and input the data to the data destinations 118(1-3) that receive, or consume, the data that is output. Accordingly, the execution graph 124 shows how a graph node 126 represents an operator 120 and a graph edge 128 connects two graph nodes. In the example of FIG. 1, the data sources 116 and/or the data destinations 118 can be one or more of the endpoint devices 110(1-N) configured within the remote location 108. Additionally or alternatively, the data sources 116 and/or the data destinations 118 can be one or more devices that are configured within different remote locations or the cloud platform 114.

An operator 120 is a fundamental unit of a dataflow that performs at least one data processing function for a data processing application. Furthermore, an operator 120 is associated with a module (e.g., is configured to execute a module). As described above, a module comprises a unit of programming code that performs a function related to data processing. The modules 130 described herein are written in a portable binary code format (e.g., WebAssembly (WASM)) and are stored in a registry 132 managed by the cloud platform 114. As mentioned above, the registry 132 is in the cloud platform 114 and therefore may be referred to as a "centralized" registry.

As shown in FIG. 1, a version of the programmable connector 104 is created by a developer of the data processing application and is stored in the cloud platform 114 for deployment to the edge computing environment 102. The data sources 116(1-3) are configured to respectively generate streams of data items 134(1-3) (e.g., data values). Each data item is associated with a timestamp that reflects when the data item was generated. Therefore, FIG. 1 also illustrates timestamps 136(1-3) respectively associated with the streams of data items 134(1-3).

The edge computing environment 102 is configured to receive the streams of data items 134(1-3) from the respective data sources 116(1-3) defined by the programmable connector 104. The edge computing environment 102 then uses the execution graph 124 to process the streams of data items 134(1-3) according to the timestamps 136(1-3). The processing generates processed data items 138 that the edge computing environment 102 provides to the data destinations 118(1-3) defined by the programmable connector 104.

In an execution graph 124, a data item moves between operators 120 and along edges 122. The timestamps 136(1-3) associated with the data items 134(1-3) are used to coordinate the flow of data and ensure computations are performed in a consistent manner. As described above, an operator 120 is configured to perform a function on at least one stream of data items 134(1-3) and provide the stream of data items 134(1-3) to a next operator 120 or a data destination 118(1-3) via an edge 122 defined by the programmable connector 104.

In various examples, an operator 120 defined by the programmable connector 104 includes a uniform resource identifier (e.g., a uniform resource locator) that identifies the module 130 that contains code. The module 130 may be a container image that is stored in the registry 132 in the cloud platform 114. By using references to modules 130 stored in the registry 132, a module 130 can be accessed by more than one execution graph and/or programmable connector. When the execution graph 124 is constructed and deployed to a cluster of host servers 106 in an edge computing environment 102 using the programmable connector 104, the code is downloaded from the cloud platform 114 to a corresponding host server 106 for execution.

To handle an update, FIG. 1 illustrates that a version of the programmable connector 104 deployed to the edge computing environment 102 includes an update monitor 140. The update monitor 140 is configured to monitor the registry 132 for an update 142 to a module 130 referenced by any one of the operators 120 in the execution graph 124. The update 142 may be based on a developer modifying the code in a module thereby creating a modified module 144. Accordingly, during the processing of the streams of data items 134(1-3), the update monitor 140 may determine that the programmable connector 104 has been modified via an update 142 to an operator 120 and corresponding referenced module that already exist in the programmable connector 104. For example, a developer can create a new version of a module that is referenced by an operator 120 in the execution graph 124, compile the new version of the module into a container image, and push the container image to the registry 132. Each container image can be tagged with a label (e.g., "latest" or "most recent") or a version identifier (e.g., "1", "2", "3", and so forth) so the registry 132 and/or the update monitor 140 can appropriately manage different versions of a module. When the update monitor 140 determines that the programmable connector 104 has been modified via an update 142 to a module 144 associated with an operator 120, the cloud platform 114 deploys 146 the update 142 (e.g., enables the downloading of the modified module 144 to the edge computing environment 102) so the programmable connector 104 can perform the update 142 on a host server in the edge computing environment 102. That is, the programmable connector 104 can install the modified module 144 on the host server executing the operator 120 targeted by the update 142. The installation involves swapping the module 130 of the operator 120 targeted by the update 142 out and replacing it with the modified module144. More specifically, the modified module 144 (e.g., a WASM module) is loaded in parallel while the module 130 of the operator 120 continues to function. Once loaded, a pointer to the (old) module 130 is switched to the (new) modified module 144 and the old module 130 is discarded. Consequently, the structure of the execution graph 124 remains unchanged and there is no interruption or downtime caused by the module swapping and pointer switching.

Additionally, the update monitor 140 is configured to monitor the cloud platform's version of the programmable connector 104 to determine if a different type of update 150 has occurred. For example, a developer may add a new operator to the programmable connector 104, or alternatively, remove an existing operator from the programmable connector 104, thereby changing the structure 152 of the execution graph 124. The programmable connector 104 can additionally perform these type of updates 148 on a host server in the edge computing environment 102. That is, the programmable connector 104 can assign the new operator to a host server and download and install a new module referenced by the new operator for execution on the host server. Or, the programmable connector 104 can identify the host server that is executing an existing operator, and remove the existing operator from the host server. An addition of a new operator and/or the removal of an existing operator can be done while the execution graph 124 continues to receive and process the streams of data items 134(1-3). This is done by constructing, based on the update 140, a new execution graph with operators and edges between operators. This construction occurs while the existing execution graph continues to process data. Once the new execution graph is fully constructed, the data processing is seamlessly transitioned from the (old) execution graph to the new execution graph. For example, the edge computing environment 102 ceases to input new data into the old execution graph, completes the processing of the data that is already being processed in the old execution graph, switches the data input to the new execution graph, and then removes the old execution graph. Accordingly, the update can add or remove a data source from which an associated stream of data items is received and/or a data destination to which processed data items are provided.

The execution graph and the logic for the updates 142 or 150 are within a single running process, so changes to an operator or a structure of the execution graph is programmatic and does not involve a coordinated deployment of different or additional processes. Consequently, when a referenced module is updated and/or when the structure of the execution graph changes, the programmable connector 104 automatically reloads selective operators and/or reconstructs the dataflow without interrupting the ongoing processing of the data items.

By implementing the data processing in the edge computing environment 102 using the programmable connector 104 capable of constructing an execution graph 124 for downloadable modules 130 written in a portable binary code format, the techniques described herein allow for more agility and flexibility with regard to changing circumstances related to a data processing application. More specifically, an update 142 to the application can target a specific module and/or operator, and thus, the update 142 does not need to be scheduled and hardcoded into the underlying infrastructure (e.g., a Kubernetes pod) thereby causing the entire application to be recompiled. Developers can quickly and safely update and extend data processing logic by adding and/or modifying operators 120 within the execution graph 124. Consequently, the techniques described herein eliminate the issues related to downtime and/or latency (e.g., caused by reboots and cold-starts), scalability, and the real-time management and adaptability of data sources and/or data destinations. As a result, the techniques described herein improve the availability of a tenant service/application that is dependent on prompt data analysis and decision-making.

Furthermore, since the modules 130 are written in a portable binary code format, user-defined dynamically linked libraries no longer need to be reloaded when an update to an application is deployed. This removes or limits the exposure to an external and, perhaps, malicious entity. Additionally, dynamically linked libraries are platform-specific, which causes portability issues for applications configured to be executed across different operating systems or architectures. Using a platform independent portable binary code format, such as WASM, allows the modules to execute on a diverse set of operating systems or architectures in an efficient manner as modules written in a portable binary code format only require a small memory footprint.

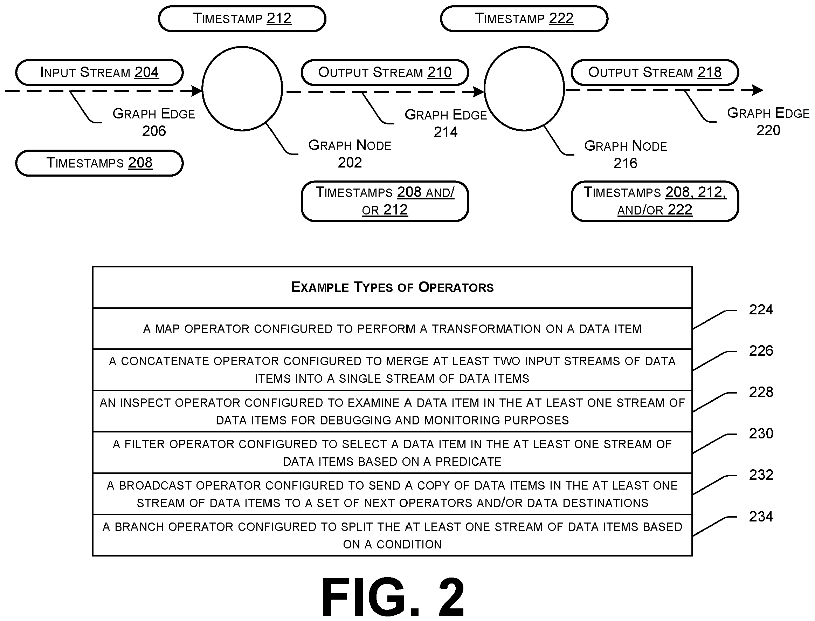

FIG. 2 illustrates example types of operators and the functions performed on the data streams by the example types of operators. As shown at the top of FIG. 2, a first graph node 202 representing a first operator receives an input stream 204 of data items via a first graph edge 206. The input stream 204 of data items may be received from a data source 116 defined by the programmable connector 104, and thus, the data items in the input stream may be associated with timestamps 208. The first operator is configured to perform a function on the input stream 204 of data items to produce an output stream 210 of data items. The first operator may also be configured to generate a timestamp 212 for each data item when the function is performed on the data item. The timestamps 212 can be added to timestamps 208 for the data items. Alternatively, the timestamps 212 can replace the timestamps 208 for the data items. Accordingly, the output stream 210 of data items is now associated with timestamps 208 and/or timestamps 212.

Via graph edge 214, the output stream 210 of data items becomes an input stream of data items for a second graph node 216 representing a second operator. The second operator is configured to perform a function on the output stream 210 of data items, which is now an input stream of data items, to produce an output stream 218 of data items. The output stream 218 of data items is provided to yet another graph node representing yet another operator, or alternatively, to a data destination, via graph edge 220. The second operator is also configured to generate a timestamp 222 for each data item when the function is performed on the data item. The timestamps 222 can be added to timestamps 208 and/or 212 for the data items. Alternatively, the timestamps 222 can replace the timestamps 212 for the data items. Accordingly, the output stream 218 of data items is now associated with timestamps 208, timestamps 212, and/or timestamps 222.

There are different types of operators, and thus, different types of functions that can be performed on the data items. Many of the operators use the timestamps to ensure that data is processed in the correct order. The data streams can be received and processed in real-time. Alternatively, the data streams can be received and processed as batches.

A map operator 224 is configured to perform a transformation on a data item. The map operator 224 uses the timestamps associated with the data items to maintain the order of the data items as they are being processed, ensuring that causality is preserved in the transformation.

A concatenate operator 226 is configured to merge at least two input streams of data items into a single stream of output data items. The concatenate operator 226 uses the timestamps associated with the data items to ensure that data items from different streams are concatenated in a coherent time order, maintaining the correct sequence of items.

An inspect operator 228 is configured to examine a data item in a stream of data items for debugging and monitoring purposes. The inspect operator 228 uses the timestamps associated with the data items to understand the timing of events and the state of various components at any point in time.

A filter operator 230 is configured to select a data item in a stream of data items based on a predicate. The filter operator 230 uses the timestamps associated with the data items to determine when conditions for filtering are satisfied.

A broadcast operator 232 is configured to send copies of data items in a stream of data items to a defined set of next operators and/or data destinations. The broadcast operator 232 uses the timestamps associated with the data items to ensure that the set of next operators or data destinations receive the data items at the correct logical time, keeping the processing state consistent.

A branch operator 234 is configured to split a stream of data items based on a condition. The branch operator 234 uses the timestamps associated with the data items to help route the data items to the correct branch without violating the temporal order of the data items.

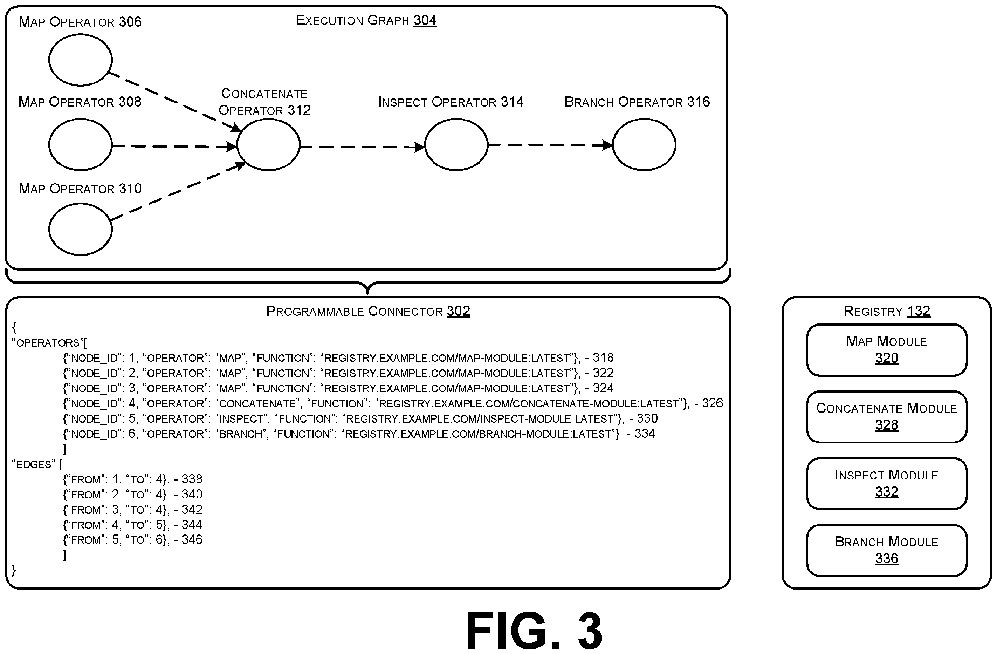

FIG. 3 illustrates an example programmable connector 302 defining components useable to construct an execution graph 304 to be deployed to an edge computing environment 102. The execution graph 304 includes six nodes representing operators defined in the programmable connector 302. A first node represents map operator 306. A second node represents map operator 308. A third node represents map operator 310. A fourth node represents concatenate operator 312. A fifth node represents inspect operator 314. A sixth node represents branch operator 316.

As specified by line 318 in the "operators" section of the programmable connector 304, the first node representing the map operator 306 is associated with a node identification "1" and the first node is configured to perform the mapping function defined in the map module 320 referenced by "registry.example.com/map-module:latest".

As specified by line 322 in the "operators" section of the programmable connector 302, the second node representing the map operator 308 is associated with a node identification "2" and the second node is also configured to perform the mapping function defined in the map module 320 referenced by "registry.example.com/map-module:latest".

As specified by line 324 in the "operators" section of the programmable connector 302, the third node representing the map operator 310 is associated with a node identification "3" and the third node is also configured to perform the mapping function defined in the map module 320 referenced by "registry.example.com/map-module:latest".

As specified by line 326 in the "operators" section of the programmable connector 302, the fourth node representing the concatenate operator 312 is associated with a node identification "4" and the fourth node is configured to perform the concatenate function defined in the concatenate module 328 referenced by "registry.example.com/concatenate-module:latest".

As specified by line 330 in the "operators" section of the programmable connector 302, the fifth node representing the inspect operator 314 is associated with a node identification "5" and the fifth node is configured to perform the inspect function defined in the inspect module 332 referenced by "registry.example.com/inspect-module:latest".

As specified by line 334 in the "operators" section of the programmable connector 302, the sixth node representing the branch operator 316 is associated with a node identification "6" and the sixth node is configured to perform the branch function defined in the branch module 336 referenced by "registry.example.com/branch-module:latest".

Furthermore, the "edges" section of the programmable connector 302 defines the edges 122 used to construct the execution graph 304. As specified by line 338 in the "edges" section of the programmable connector 302, the output of the first node representing the map operator 306 is passed along an edge to the fourth node representing the concatenate operator 312. As specified by line 340 in the "edges" section of the programmable connector 302, the output of the second node representing the map operator 308 is similarly passed along an edge to the fourth node representing the concatenate operator 312. As specified by line 342 in the "edges" section of the programmable connector 302, the output of the third node representing the map operator 310 is similarly passed along an edge to the fourth node representing the concatenate operator 312.

As specified by line 344 in the "edges" section of the programmable connector 302, the output of the fourth node representing the concatenate operator 312 is passed along an edge to the fifth node representing the inspect operator 314. As specified by line 346 in the "edges" section of the programmable connector 302, the output of the fifth node representing the inspect operator 314 is passed along an edge to the sixth node representing the branch operator 316.

Accordingly, FIG. 3 shows how the programmable connector 302 is written in a manner that defines data source(s), data destination(s), operators, and edges such that an execution graph 304 can be constructed.

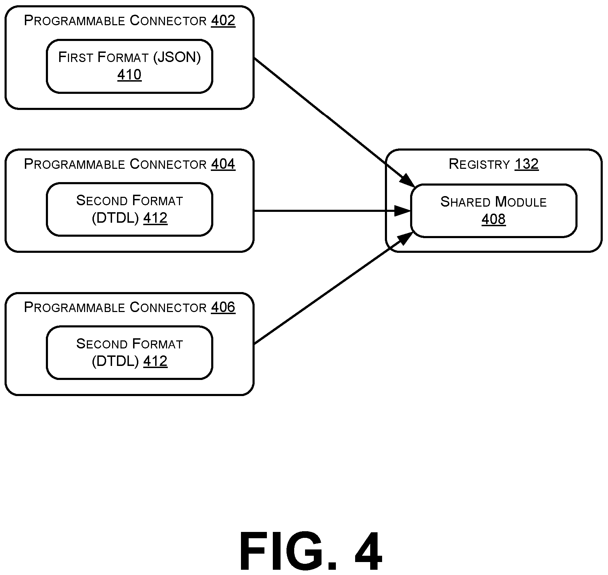

FIG. 4 illustrates the efficiencies with which the modules described herein can be shared and updated for multiple programmable connectors 402, 404, 406 written in different formats. As shown in FIG. 4, a module 408 is stored in the registry 132 and the registry 132 is centralized such that it can be accessed by multiple different programmable connectors 402, 404, 406. Accordingly, the module 408 can be referred to as a "shared" module 408 to improve the manner in which updates can be efficiently deployed and/or scaled.

Additionally, the programmable connectors 402, 404, 406 can be written in different formats and/or converted between different formats, e.g., a first format 410 such as JavaScript Object Notation (JSON) and a second format 412 such as Digital Twins Definition Language (DTDL). Using the DTDL format may be advantageous as it enables integration with digital twin systems, ensures consistency across various programmable connectors, facilitates interoperability, and allows for the scalable and flexible representation of complex digital twin models.

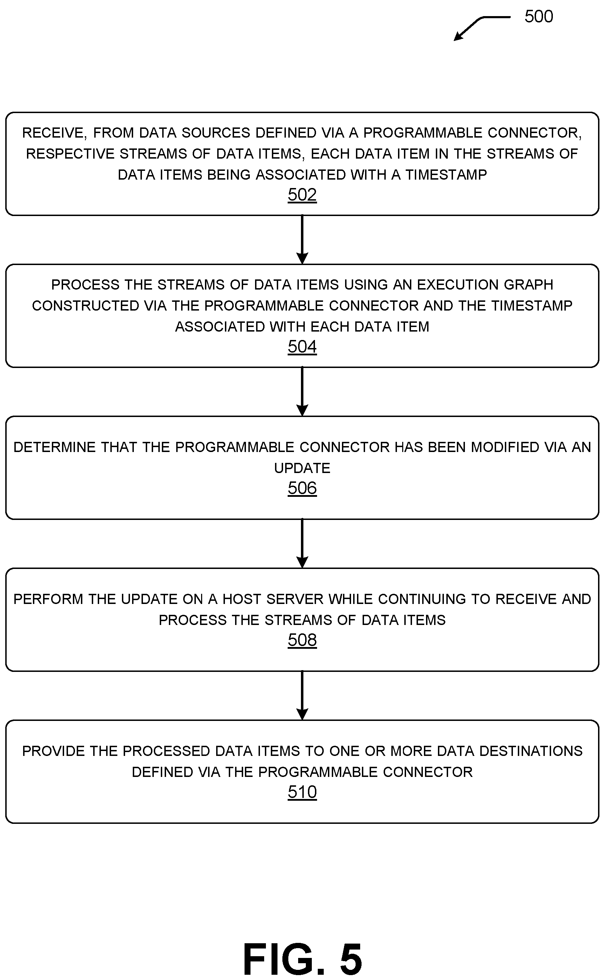

Proceeding to FIG. 5, aspects of method 500 associated with improving the management and execution of data processing in an edge computing environment 102 using a programmable connector 104. With respect to FIG. 5, the process 500 begins at operation 502 where streams of data items are received from respective data sources defined via a programmable connector. As described above, each data item in the streams of data items is associated with a timestamp.

A operation 504, the streams of data items are processed using an execution graph constructed via the programmable connector and the timestamp associated with each data item. As described above, an individual operator in the execution graph is configured to perform a function on at least one stream of data items and provide the at least one stream of data items to a next operator or a data destination via an edge defined via the programmable connector.

At operation 506, it is determined that the programmable connector has been modified via an update. In one example, the update is based on a modification to a module referenced by an operator defined by the programmable connector. In another example, the update is based on an addition of a new module to the programmable connector. In yet another example, the update is based on a removal of an existing module from the programmable connector.

At operation 508, the update is performed on a host server in an edge computing environment while continuing to receive and process the streams of data items. That is, the modified module and/or the new module may be downloaded and installed on the host server. Alternatively, an existing module may be removed from the host server.

At operation 510, processed data items are provided to one or more data destinations defined via the programmable connector.

For ease of understanding, the method discussed in this disclosure is delineated as separate operations represented as independent blocks. However, these separately delineated operations should not be construed as necessarily order dependent in their performance. The order in which the method is described is not intended to be construed as a limitation, and any number of the described blocks may be combined in any order to implement the method or alternate methods. Moreover, it is also possible that one or more of the provided operations is modified or omitted.

The particular implementation of the technologies disclosed herein is a matter of choice dependent on the performance and other requirements of a computing device. Accordingly, the logical operations described herein may be referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated methods can end at any time and need not be performed in their entireties. Some or all operations of the method, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, handheld computing devices, microprocessor-based, programmable consumer electronics, combinations thereof, and the like.

The operations of method 500 can be implemented, at least in part, by functionality produced by an application programing interface (API), a compiled program, an interpreted program, a script, or any other executable set of instructions. Data can be stored in a data structure in one or more memory components. Data can be retrieved from the data structure by addressing links or references to the data structure.

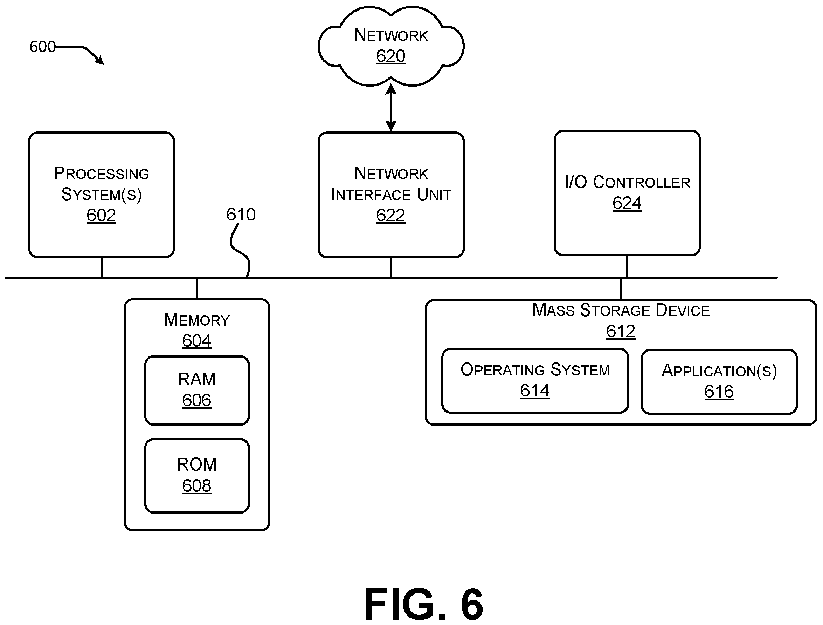

FIG. 6 shows additional details of an example computer architecture 600 for a device, such as a computer or a server configured within the environment of FIG. 1, capable of executing computer instructions. The computer architecture 600 illustrated in FIG. 6 includes processing system 602, a system memory 604, including a random-access memory 606 (RAM) and a read-only memory (ROM) 608, and a system bus 610 that couples the memory 604 to the processing system 602. The processing system 602 comprises processing unit(s). In various examples, the processing unit(s) of the processing system 602 are distributed. Stated another way, one processing unit of the processing system 602 may be located in a first location (e.g., a rack within a datacenter) while another processing unit of the processing system 602 is located in a second location separate from the first location. Moreover, the systems discussed herein can be provided as a distributed computing system such as a cloud service.

Processing unit(s), such as processing unit(s) of processing system 602, can represent, for example, a CPU-type processing unit, a GPU-type processing unit, a field-programmable gate array (FPGA), another class of digital signal processor (DSP), or other hardware logic components that may, in some instances, be driven by a CPU. For example, illustrative types of hardware logic components that can be used include Application-Specific Integrated Circuits (ASICs), Application-Specific Standard Products (ASSPs), System-on-a-Chip Systems (SOCs), Complex Programmable Logic Devices (CPLDs), and the like.

A basic input/output system containing the basic routines that help to transfer information between elements within the computer architecture 600, such as during startup, is stored in the ROM 608. The computer architecture 600 further includes a mass storage device 612 for storing an operating system 614, application(s) 616, and other data described herein.

The mass storage device 612 is connected to processing system 602 through a mass storage controller connected to the bus 610. The mass storage device 612 and its associated computer-readable media provide non-volatile storage for the computer architecture 600. Although the description of computer-readable media contained herein refers to a mass storage device, the computer-readable media can be any available computer-readable storage media or communication media that can be accessed by the computer architecture 600.

Computer-readable media includes computer-readable storage media and/or communication media. Computer-readable storage media includes one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including RAM, static RAM (SRAM), dynamic RAM (DRAM), phase change memory (PCM), ROM, erasable programmable ROM (EPROM), electrically EPROM (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 600 may operate in a networked environment using logical connections to remote computers through the network 620. The computer architecture 600 may connect to the network 620 through a network interface unit 622 connected to the bus 610. The computer architecture 600 also may include an input/output controller 624 for receiving and processing input from a number of other devices, including a keyboard, mouse, touch, or electronic stylus or pen. Similarly, the input/output controller 624 may provide output to a display screen, a printer, or other type of output device.

The software components described herein may, when loaded into the processing system 602 and executed, transform the processing system 602 and the overall computer architecture 600 from a general-purpose computing system into a special-purpose computing system customized to facilitate the functionality presented herein. The processing system 602 may be constructed from any number of transistors or other discrete circuit elements, which may individually or collectively assume any number of states. More specifically, the processing system 602 may operate as a finite-state machine, in response to executable instructions contained within the software modules disclosed herein. These computer-executable instructions may transform the processing system 602 by specifying how the processing system 602 transition between states, thereby transforming the transistors or other discrete hardware elements constituting the processing system 602.

The disclosure presented herein also encompasses the subject matter set forth in the following clauses.

Example Clause A, a method for modifying a programmable connector that defines a plurality of data sources, one or more data destinations, a plurality of operators, and a plurality of edges that collectively construct an execution graph, the plurality of operators installed on a cluster of host servers in an edge computing environment, the method comprising: receiving, from the plurality of data sources, a respective plurality of streams of data items, wherein each data item in the plurality of streams of data items is associated with a timestamp; processing the plurality of streams of data items using the execution graph and the timestamp associated with each data item in the plurality of streams of data items, wherein: an individual operator of the plurality of operators is configured to perform a function on at least one stream of data items and provide the at least one stream of data items to a next operator or a data destination via an edge of the plurality of edges; and the processing the plurality of streams of data items generates a plurality of processed data items; determining that the programmable connector has been modified via an update; performing the update on a host server, within the cluster of host servers, while continuing to receive and process the plurality of streams of data items; and providing the plurality of processed data items to the one or more data destinations.

Example Clause B, the method of Example Clause A, wherein the individual operator includes a uniform resource identifier that identifies a module that contains code that is downloadable to a corresponding host server within the cluster of host servers.

Example Clause C, the method of Example Clause B, wherein the module is written in a portable binary code format.

Example Clause D, the method of Example Clause B or Example Clause C, wherein the module is referenced by operators in multiple different programmable connectors written in multiple different formats.

Example Clause E, the method of any one of Example Clauses A through D, wherein: the update targets an existing operator in the execution graph; the host server is executing the existing operator; and performing the update on the host server comprises installing the update on the host server.

Example Clause F, the method of any one of Example Clauses A through D, wherein: the update adds a new operator to the execution graph; the host server is assigned to execute the new operator; and performing the update on the host server comprises adding the new operator to the host server.

Example Clause G, the method of any one of Example Clauses A through D, wherein: the update removes an existing operator from the execution graph; the host server is executing the existing operator; and performing the update on the host server comprises removing the existing operator from the host server.

Example Clause H, the method of any one of Example Clauses A through D, wherein the update adds or removes at least one of: a data source from which an associated stream of data items is received; or a data destination to which at least a portion of the plurality of processed data items is provided.

Example Clause I, the method of any one of Example Clauses A through H, wherein the individual operator comprises: a map operator configured to perform a transformation on a data item in the at least one stream of data items; a concatenate operator configured to merge at least two input streams of data items into a single stream of data items; an inspect operator configured to examine a data item in the at least one stream of data items for debugging and monitoring purposes; a filter operator configured to select a data item in the at least one stream of data items based on a predicate; a broadcast operator configured to send a copy of data items in the at least one stream of data items to a set of next operators or data destinations; or a branch operator configured to split the at least one stream of data items based on a condition.

Example Clause J, a system for modifying a programmable connector that defines a plurality of data sources, one or more data destinations, a plurality of operators, and a plurality of edges that collectively construct an execution graph, the plurality of operators installed on a cluster of host servers in an edge computing environment, the system comprising: a processing system; and computer storage media storing instructions that, when executed by the processing system, cause the system to perform operations comprising: receiving, from the plurality of data sources, a respective plurality of streams of data items, wherein each data item in the plurality of streams of data items is associated with a timestamp; processing the plurality of streams of data items using the execution graph and the timestamp associated with each data item in the plurality of streams of data items, wherein: an individual operator of the plurality of operators is configured to perform a function on at least one stream of data items and provide the at least one stream of data items to a next operator or a data destination via an edge of the plurality of edges; and the processing the plurality of streams of data items generates a plurality of processed data items; determining that the programmable connector has been modified via an update; performing the update on a host server, within the cluster of host servers, while continuing to receive and process the plurality of streams of data items; and providing the plurality of processed data items to the one or more data destinations.

Example Clause K, the system of Example Clause J, wherein the individual operator includes a uniform resource identifier that identifies a module that contains code that is downloadable to a corresponding host server within the cluster of host servers.

Example Clause L, the system of Example Clause K, wherein the module is written in a portable binary code format.

Example Clause M, the system of Example Clause K or Example Clause L, wherein the module is referenced by operators in multiple different programmable connectors written in multiple different formats.

Example Clause N, the system of any one of Example Clauses J through M, wherein: the update targets an existing operator in the execution graph; the host server is executing the existing operator; and performing the update on the host server comprises installing the update on the host server.

Example Clause O, the system of any one of Example Clauses J through M, wherein: the update adds a new operator to the execution graph; the host server is assigned to execute the new operator; and performing the update on the host server comprises adding the new operator to the host server.

Example Clause P, the system of any one of Example Clauses J through M, wherein: the update removes an existing operator from the execution graph; the host server is executing the existing operator; and performing the update on the host server comprises removing the existing operator from the host server.

Example Clause Q, the system of any one of Example Clauses J through P, wherein the individual operator comprises: a map operator configured to perform a transformation on a data item in the at least one stream of data items; a concatenate operator configured to merge at least two input streams of data items into a single stream of data items; an inspect operator configured to examine a data item in the at least one stream of data items for debugging and monitoring purposes; a filter operator configured to select a data item in the at least one stream of data items based on a predicate; a broadcast operator configured to send a copy of data items in the at least one stream of data items to a set of next operators or data destinations; or a branch operator configured to split the at least one stream of data items based on a condition.

Example Clause R, computer storage media storing instructions for modifying a programmable connector that defines a plurality of data sources, one or more data destinations, a plurality of operators, and a plurality of edges that collectively construct an execution graph, the plurality of operators installed on a cluster of host servers in an edge computing environment, the instructions, when executed by a processing system, causing a system to perform operations comprising: receiving, from the plurality of data sources, a respective plurality of streams of data items, wherein each data item in the plurality of streams of data items is associated with a timestamp; processing the plurality of streams of data items using the execution graph and the timestamp associated with each data item in the plurality of streams of data items, wherein: an individual operator of the plurality of operators is configured to perform a function on at least one stream of data items and provide the at least one stream of data items to a next operator or a data destination via an edge of the plurality of edges; and the processing the plurality of streams of data items generates a plurality of processed data items; determining that the programmable connector has been modified via an update; performing the update on a host server, within the cluster of host servers, while continuing to receive and process the plurality of streams of data items; and providing the plurality of processed data items to the one or more data destinations.

Example Clause S, the computer storage media of Example Clause R, wherein the individual operator includes a uniform resource identifier that identifies a module that contains code that is downloadable to a corresponding host server within the cluster of host servers.

Example Clause T, the computer storage media of Example Clause S, wherein the module is written in a portable binary code format.

Although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without author input or prompting, whether these features, elements, and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While certain example embodiments have been described, these embodiments have been presented by way of example only, and are not intended to limit the scope of the inventions disclosed herein. Thus, nothing in the foregoing description is intended to imply that any particular feature, characteristic, step, module, or block is necessary or indispensable. Indeed, the novel methods and systems described herein may be embodied in a variety of other forms; furthermore, various omissions, substitutions and changes in the form of the methods and systems described herein may be made without departing from the spirit of the inventions disclosed herein. The accompanying claims and their equivalents are intended to cover such forms or modifications as would fall within the scope and spirit of certain of the inventions disclosed herein.

It should be appreciated any reference to "first," "second," etc. items and/or abstract concepts within the description is not intended to and should not be construed to necessarily correspond to any reference of "first," "second," etc. elements of the claims. In particular, within this Summary and/or the following Detailed Description, items and/or abstract concepts such as, for example, individual computing devices and/or operational states of the computing cluster may be distinguished by numerical designations without such designations corresponding to the claims or even other paragraphs of the Summary and/or Detailed Description.

In closing, although the various techniques have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method for modifying a programmable connector (104) that defines a plurality of data sources (116), one or more data destinations (118), a plurality of operators (120), and a plurality of edges (122) that collectively construct an execution graph (124), the plurality of operators installed on a cluster of host servers (106) in an edge computing environment (102), the method comprising:
receiving (502), from the plurality of data sources, a respective plurality of streams of data items (134), wherein each data item in the plurality of streams of data items is associated with a timestamp (136);
processing (504) the plurality of streams of data items using the execution graph and the timestamp associated with each data item in the plurality of streams of data items, wherein:
an individual operator of the plurality of operators is configured to perform a function (224-234) on at least one stream of data items and provide the at least one stream of data items to a next operator or a data destination via an edge of the plurality of edges; and
the processing the plurality of streams of data items generates a plurality of processed data items (138);
determining (506) that the programmable connector has been modified via an update (142) (150);
performing (508) the update on a host server, within the cluster of host servers, while continuing to receive and process the plurality of streams of data items; and
providing (510) the plurality of processed data items to the one or more data destinations.

2. The method of claim 1, wherein the individual operator includes a uniform resource identifier that identifies a module that contains code that is downloadable to a corresponding host server within the cluster of host servers.

3. The method of claim 2, wherein the module is written in a portable binary code format.

4. The method of claim 2 or claim 3, wherein the module is referenced by operators in multiple different programmable connectors written in multiple different formats.

5. The method of any one of claims 1 through 4, wherein:
the update targets an existing operator in the execution graph;
the host server is executing the existing operator; and
performing the update on the host server comprises installing the update on the host server.

6. The method of any one of claims 1 through 4, wherein:
the update adds a new operator to the execution graph;
the host server is assigned to execute the new operator; and
performing the update on the host server comprises adding the new operator to the host server.

7. The method of any one of claims 1 through 4, wherein:
the update removes an existing operator from the execution graph;
the host server is executing the existing operator; and
performing the update on the host server comprises removing the existing operator from the host server.

8. The method of any one of claims 1 through 4, wherein the update adds or removes at least one of:
a data source from which an associated stream of data items is received; or
a data destination to which at least a portion of the plurality of processed data items is provided.

9. The method of any one of claims 1 through 8, wherein the individual operator comprises:
a map operator configured to perform a transformation on a data item in the at least one stream of data items;
a concatenate operator configured to merge at least two input streams of data items into a single stream of data items;
an inspect operator configured to examine a data item in the at least one stream of data items for debugging and monitoring purposes;
a filter operator configured to select a data item in the at least one stream of data items based on a predicate;
a broadcast operator configured to send a copy of data items in the at least one stream of data items to a set of next operators or data destinations; or
a branch operator configured to split the at least one stream of data items based on a condition.

10. A system (600) for modifying a programmable connector (104) that defines a plurality of data sources (116), one or more data destinations (118), a plurality of operators (120), and a plurality of edges (122) that collectively construct an execution graph (124), the plurality of operators installed on a cluster of host servers (106) in an edge computing environment (102), the system comprising:
a processing system (602); and
computer storage media (604) (612) storing instructions that, when executed by the processing system, cause the system to perform operations comprising:
receiving (502), from the plurality of data sources, a respective plurality of streams of data items (134), wherein each data item in the plurality of streams of data items is associated with a timestamp (136);
processing (504) the plurality of streams of data items using the execution graph and the timestamp associated with each data item in the plurality of streams of data items, wherein:
an individual operator of the plurality of operators is configured to perform a function (224-234) on at least one stream of data items and provide the at least one stream of data items to a next operator or a data destination via an edge of the plurality of edges; and
the processing the plurality of streams of data items generates a plurality of processed data items (138);
determining (506) that the programmable connector has been modified via an update (142) (150);
performing (508) the update on a host server, within the cluster of host servers, while continuing to receive and process the plurality of streams of data items; and
providing (510) the plurality of processed data items to the one or more data destinations.

11. The system of claim 10, wherein the individual operator includes a uniform resource identifier that identifies a module that contains code that is downloadable to a corresponding host server within the cluster of host servers.

12. The system of claim 11, wherein the module is written in a portable binary code format.

13. The system of claim 11 or claim 12, wherein the module is referenced by operators in multiple different programmable connectors written in multiple different formats.

14. The system of any one of claims 10 through 13, wherein:
the update targets an existing operator in the execution graph;
the host server is executing the existing operator; and
performing the update on the host server comprises installing the update on the host server.

15. Computer storage media (604) (612) storing instructions for modifying a programmable connector (104) that defines a plurality of data sources (116), one or more data destinations (118), a plurality of operators (120), and a plurality of edges (122) that collectively construct an execution graph (124), the plurality of operators installed on a cluster of host servers (106) in an edge computing environment (102), the instructions, when executed by a processing system (602), causing a system to perform operations comprising:
receiving (502), from the plurality of data sources, a respective plurality of streams of data items (134), wherein each data item in the plurality of streams of data items is associated with a timestamp (136);
processing (504) the plurality of streams of data items using the execution graph and the timestamp associated with each data item in the plurality of streams of data items, wherein:
an individual operator of the plurality of operators is configured to perform a function (224-234)on at least one stream of data items and provide the at least one stream of data items to a next operator or a data destination via an edge of the plurality of edges; and
the processing the plurality of streams of data items generates a plurality of processed data items (138);
determining (506) that the programmable connector has been modified via an update (142) (150);
performing (508) the update on a host server, within the cluster of host servers, while continuing to receive and process the plurality of streams of data items; and
providing (510) the plurality of processed data items to the one or more data destinations.
